# EUROPÄISCHE PATENTSCHRIFT

(11) **EP 4 100 275 B1**
(45) Veröffentlichungstag und Bekanntmachung des Hinweises auf die Patenterteilung: **12.07.2023**
(21) Anmeldenummer: 21712965.9
(22) Anmeldetag: 04.03.2021
(51) Int. Cl.: B60L 9/28, B60L 50/13, B60L 50/15, B60M 3/06, B61C 9/24

(54) **ANORDNUNG UND VERFAHREN ZUR DURCHFÜHRUNG EINES SELBSTLASTTESTS BEI EINEM SCHIENENFAHRZEUG**
ARRANGEMENT AND METHOD FOR CARRYING OUT A SELF-LOAD TEST ON A RAIL VEHICLE
DISPOSITIF ET PROCÉDÉ POUR EFFECTUER UN TEST DE CHARGE AUTOMATIQUE SUR UN VÉHICULE FERROVIAIRE

(30) Priorität: 23.04.2020 DE 102020205179
(43) Veröffentlichungstag der Anmeldung: 14.12.2022
(73) Patentinhaber: Siemens Mobility GmbH, 81739 München (DE)
(72) Erfinder: BEDAU, Christian, 13597 Berlin (DE); SCHURR, Jürgen, 91052 Erlangen (DE)
(74) Vertreter: Siemens Patent Attorneys
(86) Internationale Anmeldenummer: PCT/EP2021/055524
(87) Internationale Veröffentlichungsnummer: WO 2021/213724

(56) Entgegenhaltungen:
- EP-A1- 1 186 497
- EP-B1- 1 186 497
- CN-A- 110 406 549
- US-A1- 2008 290 825
- US-A1- 2015 008 674

## Beschreibung

Die Erfindung betrifft eine Anordnung und ein Verfahren zur Durchführung eines Selbstlasttests bei einem Schienenfahrzeug (insbesondere bei einer Lokomotive), das über ein sogenanntes Dual-Mode-Antriebssystem verfügt.

Dual-Mode-Antriebssysteme sind beispielsweise aus den Druckschriften US 2015/0008674 A1 und EP 1186497 A1 bekannt. Aus der US 2008/290825 ist ein dynamischer Bremskreis, der sowohl bei hohen als auch bei niedrigen Geschwindigkeiten stabil betrieben werden kann, bekannt.

Beim hier betrachteten Dual-Mode-Antriebssystem sind zwei Antriebssysteme parallel zueinander im Schienenfahrzeug vorgesehen. Dabei basiert ein erstes Antriebssystem auf einem als Verbrennungsmotor betriebenen Dieselmotor. Der Dieselmotor wird dazu verwendet, einen Generator anzutreiben. Der Generator wiederum bildet eine entsprechende elektrische Leistung, die elektrischen Antriebsmotoren des Schienenfahrzeugs zur Fortbewegung zugeführt wird.

Beim hier betrachteten Dual-Mode-Antriebssystem basiert ein zweites Antriebssystem auf einem Betrieb des Schienenfahrzeugs am Fahrdraht. Über einen Stromabnehmer wird vom Fahrdraht elektrische Energie bzw. Leistung entnommen, umgewandelt und den elektrischen Antriebsmotoren des Schienenfahrzeugs zur Fortbewegung zugeführt.

Der Dieselmotor wird, beispielsweise im Rahmen eines Wartungsplans, zur Tauglichkeitsprüfung mit einer Belastung beaufschlagt, die im Maximalfall der Nennlast des Dieselmotors entspricht. Dies wird als "Dieselmotor-Selbstlasttest" bzw. als "Selfloadtest" bezeichnet.

Dieser Test kann beim Kunden durch einen separaten Dieselmotortest erfolgen, bei dem der Dieselmotor auf einem speziellen Teststand mit einer sogenannten Lastmaschine verbunden und unter entsprechender Last bzw. Belastung betrieben wird.

Alternativ dazu wird beim Selbsttest die Leistung des Dieselmotors durch eine entsprechende Nutzung einer Antriebskette der Lokomotive über den Hauptgenerator mit nachgeschaltetem Umrichter und Bremssteller im Stand dem Bremswiderstand zugeführt. Die beim Selbsttest erzeugte Leistung bzw. Energie wird in einem installierten Bremswiderstand in Wärme umgesetzt.

Ein externer, zusätzlicher Lastwiderstand wird parallel zu einem fahrzeugintern vorhandenen Bremswiderstand geschaltet, wenn die umzusetzende Leistung die Nennleistung des fahrzeuginternen Bremswiderstands überschreiten würde.

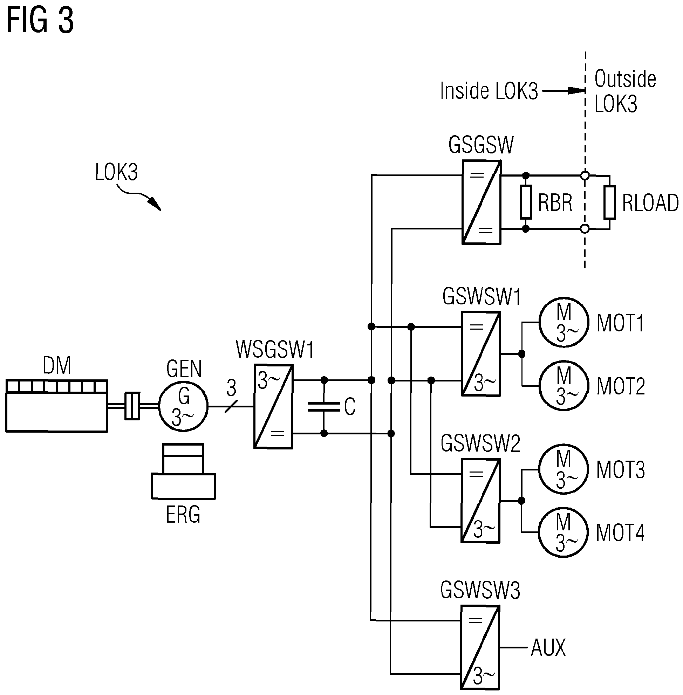

FIG 3 zeigt als Beispiel für ein Schienenfahrzeug Komponenten einer Diesel-elektrischen Lokomotive LOK3 und ihre Verwendung beim Selbstlasttest gemäß dem Stand der Technik.

Ein Dieselmotor DM wird als Verbrennungsmotor betrieben und ist über eine Kupplung mit einem Generator GEN mechanisch verbunden. Der Generator GEN wird über den Dieselmotor DM mechanisch angetrieben, wobei zur Bildung von elektrischer Leistung der Generator GEN mit einem Erregergerät ERG gekoppelt ist.

Vom Generator GEN gebildete elektrische Leistung gelangt zu einem Wechselspannungs-Gleichspannungs-Wandler WSGSW1, der aus der zugeführten Wechselspannung eine Gleichspannung bildet. Zur Reduzierung einer Spannungswelligkeit im nachfolgenden Zwischenkreis ist am Wechselspannungs-Gleichspannungs-Wandler WSGSW1 ausgangsseitig ein Kondensator C parallelgeschaltet bzw. vorgesehen.

Der Wechselspannungs-Gleichspannungs-Wandler WSGSW1 ist ausgangsseitig mit Eingängen von drei parallelgeschalteten Gleichspannungs-Wechselspannungs-Wandlern GSWSW1 bis GSWSW3 verbunden, so dass die vom Wechselspannungs-Gleichspannungs-Wandler WSGSW1 gebildete Gleichspannung an allen Eingängen der drei Gleichspannungs-Wechselspannungs-Wandlern GSWSW1 bis GSWSW3 anliegt.

Die drei Gleichspannungs-Wechselspannungs-Wandler GSWSW1 bis GSWSW3 bilden aus der zugeführten Gleichspannung jeweilige Wechselspannungen zur weiteren Verwendung.

Ein erster Gleichspannungs-Wechselspannungs-Wandler GSWSW1 bildet Wechselspannung für einen ersten Antriebsmotor MOT1 und für einen zweiten Antriebsmotor MOT2 des Schienenfahrzeugs bzw. Lokomotive.

Ein zweiter Gleichspannungs-Wechselspannungs-Wandler GSWSW2 bildet Wechselspannung für einen dritten Antriebsmotor MOT3 und für einen vierten Antriebsmotor MOT4 des Schienenfahrzeugs bzw. der Lokomotive.

Ein dritter Gleichspannungs-Wechselspannungs-Wandler GSWSW3 bildet Wechselspannung für Hilfsantriebe (z.B. Kompressor, Lüftung, etc.) bzw. für weitere als AUX bezeichnete Verwendungen beim Schienenfahrzeug bzw. bei der Lokomotive.

Der Wechselspannungs-Gleichspannungs-Wandler WSGSW1 ist ausgangsseitig darüber hinaus auch mit Eingängen eines Gleichspannungs-Gleichspannungs-Wandlers GSGSW verbunden, der ebenfalls parallel zu den drei Gleichspannungs-Wechselspannungs-Wandlern GSWSW1 bis GSWSW3 geschaltet ist, so dass die vom Wechselspannungs-Gleichspannungs-Wandler WSGSW1 gebildete Gleichspannung an den Eingängen des Gleichspannungs-Gleichspannungs-Wandlers GSGSW anliegt.

Die beim Selbsttest des Dieselmotors DM gebildete elektrische Leistung wird über den Gleichspannungs-Gleichspannungs-Wandler GSGSW einem Bremswiderstand RBR zugeführt, der im Schienenfahrzeug bzw. in der Lokomotive LOK3 angeordnet ist. Dies ist mit dem Bezugszeichen "Inside LOK3" markiert.

Zusätzlich ist im Rahmen des Selbsttests parallel zum Bremswiderstand RBR ein Fahrzeug-externer Lastwiderstrand RLOAD geschaltet. Dies ist mit dem Bezugszeichen "Outside LOK3" markiert.

Die beiden Widerstände RBR, RLOAD wandeln die ihnen zugeführte elektrische Leistung in Wärme um.

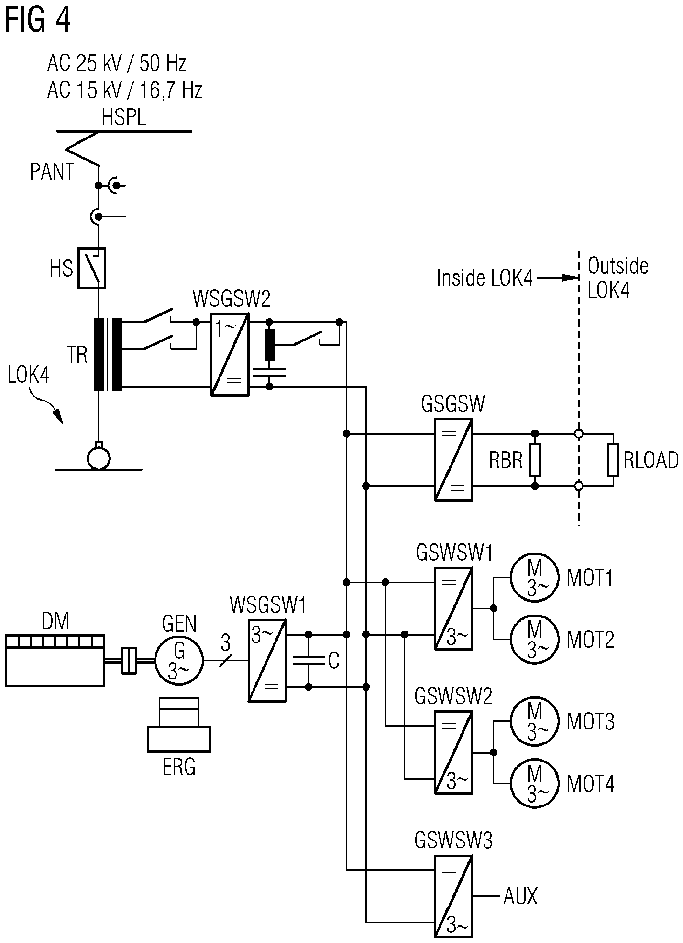

FIG 4 zeigt als Beispiel für ein Schienenfahrzeug Komponenten einer Dual-Mode-Lokomotive LOK4 und ihre Verwendung beim Selbstlasttest gemäß dem Stand der Technik.

Mit Bezug auf FIG 3 gelten für gleiche Bezugszeichen die oben gemachten Ausführungen.

Zusätzlich zum Antriebssystem mit Dieselmotor DM ist hier ein weiteres Antriebssystem vorgesehen. Dieses basiert auf einem elektrischen Betrieb des Schienenfahrzeugs unter Verwendung einer Oberleitung und eines Stromabnehmers bzw. Pantographen PANT.

Der Stromabnehmer PANT entnimmt der Oberleitung, die hier beispielhaft als Hochspannungsleitung HSPL ausgebildet ist, elektrische Leistung bzw. Energie und führt diese über einen Hauptschalter HS einem Transformator TR zu.

Der Transformator TR bildet aus einer ihm zugeführten Eingangswechselspannung eine vorbestimmte Ausgangswechselspannung, die an Eingänge eines weiteren Wechselspannungs-Gleichspannungs-Wandlers WSGSW2 gelangt.

Der Wechselspannungs-Gleichspannungs-Wandlers WSGSW2 bildet aus der ihm zugeführten Wechselspannung eine Gleichspannung, die an die Eingänge der drei Gleichspannungs-Wechselspannungs-Wandler GSWSW1 bis GSWSW3 sowie an die Eingänge des Gleichspannungs-Gleichspannungs-Wandlers GSGSW gelangt.

Die beim Selbsttest des Dieselmotors DM gebildete elektrische Leistung wird über den Gleichspannungs-Gleichspannungs-Wandler GSGSW wieder dem Bremswiderstand RBR zugeführt, der im Schienenfahrzeug bzw. in der Lokomotive LOK4 angeordnet ist. Dies ist mit dem Bezugszeichen "Inside LOK4" markiert.

Zusätzlich ist im Rahmen des Selbsttests parallel zum Bremswiderstand RBR der Fahrzeug-externe Lastwiderstrand RLOAD geschaltet. Dies ist mit dem Bezugszeichen "Outside LOK4" markiert.

Die beiden Widerstände RBR, RLOAD wandeln die ihnen zugeführte elektrische Leistung in Wärme um.

Die Umwandlung in Wärme über den Fahrzeug-externen Lastwiderstrand bzw. über den internen Bremswiderstand ist aufwendig, kostenintensiv, umständlich und auch aus ökologischer Sicht nicht optimal.

Es ist die Aufgabe der vorliegenden Erfindung, eine verbesserte Anordnung zur Durchführung eines Selbstlasttests bei einem Dual-Mode-Schienenfahrzeug anzugeben.

Diese Aufgabe wird durch die Merkmale des unabhängigen Anspruchs 1 gelöst.

Vorteilhafte Weiterbildungen sind durch die abhängigen Ansprüche angegeben.

Die Erfindung betrifft eine Anordnung und Verfahren zur Durchführung eines Selbstlasttests mit einem Schienenfahrzeug, das über ein Dual-Mode-Antriebssystem verfügt.

Ein erstes Antriebssystem des Schienenfahrzeugs umfasst einen Dieselmotor, der mit einem elektrischen Generator gekoppelt ist, um elektrische Leistung zu erzeugen. Der Generator ist ausgangsseitig über einen ihm nachgeschalteten ersten Wandler mit einem Gleichspannungszwischenkreis verbunden, so dass die vom Generator gelieferte Leistung bei Bedarf über den ersten Wandler in den Gleichspannungszwischenkreis übertragbar ist.

Das zweite Antriebssystem des Schienenfahrzeugs weist ein elektrisches Leitungssystem auf, das über einen ihm nachgeschalteten zweiten Wandler mit dem Gleichspannungszwischenkreis verbunden ist, so dass bei Bedarf Leistung vom Leitungssystem in den Gleichspannungszwischenkreis übertragbar ist.

Beim Selbstlasttest des Dieselmotors sind der Generator, der erste Wandler, der Gleichspannungszwischenkreis, der zweite Wandler und das Leitungssystem derart geschaltet, dass die vom Generator beim Selbstlasttest des Dieselmotors gelieferte Leistung über den ersten Wandler und über den Gleichspannungszwischenkreis zumindest teilweise an den zweiten Wandler gelangt und dass die dem zweiten Wandler zugeführte Leistung in das Leitungssystem eingespeist wird.

Erfindungsgemäß ist der Gleichspannungszwischenkreis über einen dritten Wandler mit einem Bremswiderstand verbunden, der innerhalb des Schienenfahrzeugs angeordnet ist.

Der dritte Wandler ist derart ansteuerbar, dass beim Bremsen nicht mehr benötigte Leistung aus dem Gleichspannungszwischenkreis dem Bremswiderstand zugeführt wird. Der Bremswiderstand ist derart dimensioniert, dass er die ihm zugeführte Leistung in Wärme umformt.

Beim Selbstlasttest ist der dritte Wandler derart ansteuerbar, dass ein erster Teil der vom Dieselmotor erzeugten Leistung, die über den ersten Wandler in den Gleichspannungszwischenkreis gelangt, von dort über den dritten Wandler dem Bremswiderstand zugeführt wird.

Beim Selbstlasttest ist der zweite Wandler derart ansteuerbar, dass ein zweiter Teil der vom Dieselmotor erzeugten Leistung, die über den ersten Wandler in den Gleichspannungszwischenkreis gelangt, von dort über den zweiten Wandler dem Leitungssystem zugeführt wird.

In einer vorteilhaften Weiterbildung ist das Leitungssystem als Oberleitungssystem oder als Schienen-nahes Leitungssystem ausgebildet.

In einer vorteilhaften Weiterbildung ist das Leitungssystem als Gleichstrom-basiertes Leitungssystem oder als Wechselstrom-basiertes Leitungssystem ausgebildet.

In einer vorteilhaften Weiterbildung ist Wechselstrom-basierte Leitungssystem über einen Transformator mit dem zweiten Wandler verbunden. Der zweite Wandler ist als Wechselspannungs-Gleichspannungswandler geschaltet, um Leistung aus dem Leitungssystem in den Gleichspannungszwischenkreis zu übertragen. Der zweite Wandler ist als Gleichspannungs-Wechselspannungswandler geschaltet, um beim Selbstlasttest Leistung aus dem Gleichspannungszwischenkreis in das Leitungssystem zu übertragen.

Erfindungsgemäß ist der erste Wandler als Wechselspannungs-Gleichspannungswandler geschaltet, um Leistung vom Generator in den Gleichspannungszwischenkreis zu übertragen.

Erfindungsgemäß ist der dritte Wandler als Gleichspannungs-Gleichspannungswandler geschaltet, um beim Selbstlasttest bzw. beim Bremsen Leistung aus dem Gleichspannungszwischenkreis zum Bremswiderstand zu übertragen.

In einer vorteilhaften Weiterbildung ist zumindest ein elektrischer Motor, der als Antriebsmotor des Schienenfahrzeugs mit einem Rad des Schienenfahrzeugs gekoppelt ist, über einen weiteren Wandler mit dem Gleichspannungszwischenkreis verbunden. Dieser Wandler ist als Gleichspannungs-Wechselspannungswandler ausgebildet und derart geschaltet, dass Leistung aus dem Gleichspannungszwischenkreis zum Antriebsmotor übertragen wird.

Durch die erfindungsgemäße Anordnung wird die beim Selbsttest durch den Dieselmotor gelieferte Energie in das Oberleitungsnetz eingeführt. Sie geht damit nicht mehr als Wärme verloren, sondern steht im Oberleitungsnetz für andere Verwendungen zur Verfügung. Dadurch ergibt sich auch aus ökologischer Sicht ein positiver Effekt.

Durch die erfindungsgemäße Anordnung ergeben sich beim Betreiber des Dual-Mode-Schienenfahrzeugs geringere Energiekosten, denn Schienenfahrzeuge bzw. Lokomotiven sind mit Energiezählern ausgestattet, die eine Energierückspeisung positiv in der Energiebilanz berücksichtigen.

Die erfindungsgemäße Anordnung ermöglicht es dem Betreiber, auch bei einem schwach aufnahmefähigem Oberleitungsnetz einen Selbstlasttest vollumfänglich durchzuführen.

Zusammengefasst enthält die erfindungsgemäße dieselelektrisch-elektrische Dual-Mode-Lokomotive in ihrem Antriebssystem einen Hauptgleichrichter (z.B. den nachfolgend beschriebenen Wandler WSGSW1) und einen separaten Netzteilstromrichter, (z.B. den nachfolgend beschriebenen Wandler WSGSW2), der als sogenannter 4-Quadrantensteller ausgebildet ist.

Der separate Netzteilstromrichter übernimmt die Rückspeisung der vom Dieselmotor gelieferten Energie über den Haupttransformator ins Oberleitungsnetz. Dabei werden Hauptgleichrichter und Netzteilstromrichter parallel betrieben.

Die Fahrzeugsteuerung erhält eine Software, die die Funktionalität der Energierückspeisung über den 4-Quadrantensteller, der dann im Wechselrichtermodus arbeitet, in der Betriebsart "Selfloadtest" ermöglicht.

Der Bremssteller wird im Allgemeinen nicht aktiviert, der installierte Bremswiderstand ist im Allgemeinen stromlos.

Falls das Oberleitungsnetz nicht die gesamte Energiemenge aufnehmen kann, wird ein Teil der vom Dieselmotor gelieferten Energie im installierten Bremswiderstand abgeführt.

Dann wird der Bremssteller angesteuert, der 4-Quadrantensteller wird (vor allem im Stand) dann netzstrombegrenzend betrieben.

Ebenso kann ein Teil der vom Dieselmotor gelieferten Energie ins Oberleitungsnetz gespeist werden, wenn ein externer Leistungswiderstand beim Betreiber nicht zur Verfügung steht.

Die Erfindung wird durch die Software der Fahrzeugsteuerung definiert. Diese erfüllt folgende Aufgaben:
Das Fahrzeug wird in die Betriebsart "Selbstlasttest" gebracht, dadurch werden die Antriebswechselrichter sicher gesperrt, die Lokomotive bleibt im Stillstand.

Die Dieselmotor-Leistungsregelung erhält die Testvorgabe über die Belastung (von Leistungseigenbedarf der Lokomotive, also fast Null, bis Dieselmotor-Nennleistung).

Die Betriebsart "Energierückspeisung beim Selbstlasttest" ist vorwählbar.

Die Betriebsart "Energierückspeisung beim Selbstlasttest" kann mit maximaler Dieselmotorleistung erfolgen.

Die Betriebsart "Energierückspeisung beim Selbstlasttest" kann mit Netzstrombegrenzung (z.B. auf 80A (@15kV) oder 50A (@25kV) oder einem anderen Wert) erfolgen.

Es ist somit auch möglich, einen Teil der vom Dieselmotor gelieferten Energie im installierten Bremswiderstand in abgeführte Wärme umzusetzen, dazu wird der Bremssteller angesteuert und bei Bremsregelspannung betrieben.

Nachfolgend wird die Erfindung anhand einer Zeichnung näher erläutert. Dabei zeigt:
- FIG 1: eine erste Ausgestaltung der erfindungsgemäßen Anordnung zum Selbstlasttest bei einer Dual-Mode-Lokomotive,
- FIG 2: eine zweite Ausgestaltung der erfindungsgemäßen Anordnung zum Selbstlasttest bei einer Dual-Mode-Lokomotive,
- FIG 3: den in der Einleitung beschriebenen Selbstlasttest samt zugehöriger Komponenten bei einer Diesel-elektrischen Lokomotive, und
- FIG 4: den in der Einleitung beschriebenen Selbstlasttest samt zugehöriger Komponenten bei einer Dual-Mode-Lokomotive.

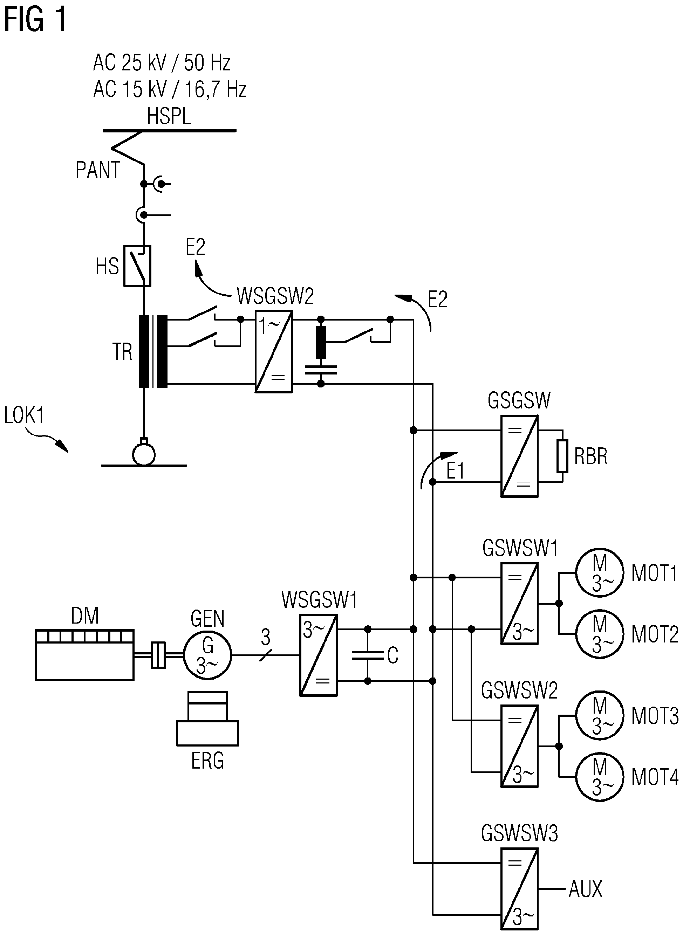

FIG 1 zeigt eine erste Ausgestaltung der erfindungsgemäßen Anordnung zum Selbstlasttest bei einer Dual-Mode-Lokomotive LOK1.

Nachfolgend wird der elektrische Leistungsfluss beim Fahrbetrieb der Dual-Mode-Lokomotive LOK1 geschildert.

Ein erstes Antriebssystem ist über einen Dieselmotor DM realisiert. Der Dieselmotor DM wird als Verbrennungsmotor betrieben und ist über eine Kupplung mit einem Generator GEN mechanisch verbunden. Der Generator GEN wird über den Dieselmotor DM mechanisch angetrieben, wobei zur Bildung von elektrischer Leistung der Generator GEN mit einem Erregergerät ERG gekoppelt ist.

Vom Generator GEN gelieferte elektrische Leistung gelangt zu einem Wechselspannungs-Gleichspannungs-Wandler WSGSW1, der aus der zugeführten Wechselspannung eine Gleichspannung bildet. Zur Reduzierung der Spannungswelligkeit im Spannungszwischenkreis ist am Wechselspannungs-Gleichspannungs-Wandler WSGSW1 ausgangsseitig ein Kondensator C parallelgeschaltet bzw. vorgesehen.

Der Wechselspannungs-Gleichspannungs-Wandler WSGSW1 ist ausgangsseitig mit Eingängen von drei parallelgeschalteten Gleichspannungs-Wechselspannungs-Wandlern GSWSW1 bis GSWSW3 verbunden, so dass die vom Wechselspannungs-Gleichspannungs-Wandler WSGSW1 gebildete Gleichspannung an allen Eingängen der drei Gleichspannungs-Wechselspannungs-Wandlern GSWSW1 bis GSWSW3 anliegt.

Durch die Ausgänge des Wechselspannungs-Gleichspannungs-Wandler WSGSW1 sowie durch die Eingänge der Gleichspannungs-Wechselspannungs-Wandler GSWSW1 bis GSWSW3 wird zusammen mit dem Kondensator C ein sogenannter Gleichspannungszwischenkreis gebildet.

Die drei Gleichspannungs-Wechselspannungs-Wandler GSWSW1 bis GSWSW3 bilden aus der zugeführten Gleichspannung jeweilige Wechselspannungen zur weiteren Verwendung.

Ein erster Gleichspannungs-Wechselspannungs-Wandler GSWSW1 bildet Wechselspannung für einen ersten Antriebsmotor MOT1 und für einen zweiten Antriebsmotor MOT2 des Schienenfahrzeugs bzw. der Lokomotive.

Ein zweiter Gleichspannungs-Wechselspannungs-Wandler GSWSW2 bildet Wechselspannung für einen dritten Antriebsmotor MOT3 und für einen vierten Antriebsmotor MOT4 des Schienenfahrzeugs bzw. der Lokomotive.

Ein dritter Gleichspannungs-Wechselspannungs-Wandler GSWSW3 bildet Wechselspannung für die Hilfsantriebe (z.B. Kompressor, Lüftung, etc.) bzw. für weitere als AUX bezeichnete Verwendungen beim Schienenfahrzeug bzw. bei der Lokomotive.

Der Wechselspannungs-Gleichspannungs-Wandler WSGSW1 ist ausgangsseitig darüber hinaus auch mit Eingängen eines Gleichspannungs-Gleichspannungs-Wandlers GSGSW verbunden, der ebenfalls parallel zu den drei Gleichspannungs-Wechselspannungs-Wandlern GSWSW1 bis GSWSW3 geschaltet ist.

Damit liegt die vom Wechselspannungs-Gleichspannungs-Wandler WSGSW1 gebildete Gleichspannung an den Eingängen des Gleichspannungs-Gleichspannungs-Wandlers GSGSW an.

Die Eingänge des Gleichspannungs-Gleichspannungs-Wandlers GSGSW sind ebenfalls Bestandteil des Gleichspannungszwischenkreises.

Am Gleichspannungs-Gleichspannungs-Wandler GSGSW ist ausgangsseitig ein Bremswiderstand RBR angeschlossen.

Beim Bremsen der Antriebsmotoren MOT1 bis MOT4 wird nicht benötigte Leistung bzw. Energie vom Gleichspannungszwischenkreis über den Gleichspannungs-Gleichspannungs-Wandler GSGSW dem Bremswiderstand RBR zugeführt, der diese in Wärme umwandelt.

Als Alternative zum Antriebstrang über den Dieselmotor DM ist hier ein weiterer Antriebsstrang vorgesehen, der auf dem elektrischen Betrieb mit einem Stromabnehmer bzw. Pantographen PANT basiert.

Der Stromabnehmer PANT entnimmt einer Oberleitung bzw. Hochspannungsleitung HSPL elektrische Leistung bzw. Energie und führt diese über einen Hauptschalter HS einem Transformator TR zu.

Der Transformator TR bildet aus einer ihm zugeführten Eingangswechselspannung eine vorbestimmte Ausgangswechselspannung, die an Eingänge eines weiteren Wechselspannungs-Gleichspannungs-Wandlers WSGSW2 gelangt.

Der Wechselspannungs-Gleichspannungs-Wandler WSGSW2 bildet aus der ihm zugeführten Wechselspannung eine Gleichspannung für den Gleichspannungszwischenkreis.

Diese gelangt an die Eingänge der drei Gleichspannungs-Wechselspannungs-Wandler GSWSW1 bis GSWSW3 sowie an die Eingänge des Gleichspannungs-Gleichspannungs-Wandlers GSGSW und von dort, wie vorstehend beschrieben, zur jeweiligen weiteren Verwendung.

Nachfolgend wird der elektrische Leistungsfluss beim Selbsttest des Dieselmotors DM der Dual-Mode-Lokomotive LOK1 geschildert.

Die beim Selbsttest des Dieselmotors DM gebildete elektrische Leistung gelangt wie vorstehend beschrieben in den Gleichspannungszwischenkreis.

Seitens der Motoren MOT1 bis MOT4 wird beim Selbsttest keine Leistung benötigt, so dass die Leistung wie nachfolgend beschrieben aufgeteilt wird.

Ein erster Anteil E1 der Leistung gelangt über den Gleichspannungs-Gleichspannungs-Wandler GSGSW an den Bremswiderstand RBR, der im Schienenfahrzeug bzw. in der Lokomotive angeordnet ist. Der Bremswiderstand RBR wandelt die ihm zugeführte elektrische Teilleistung E1 in Wärme um.

Ein zweiter Anteil E2 der Leistung gelangt aus dem Gleichspannungszwischenkreis über eine Serienschaltung, die den Wandler WSGSW2, den Transformator TR, den Hauptschalter HS und den Pantografen PANT umfasst, zur Hochspannungsleitung HSPL.

Aufgrund der Aufteilung der Leistung kann vorteilhaft auf einen Schienenfahrzeug-externen Lastwiderstand verzichtet werden.

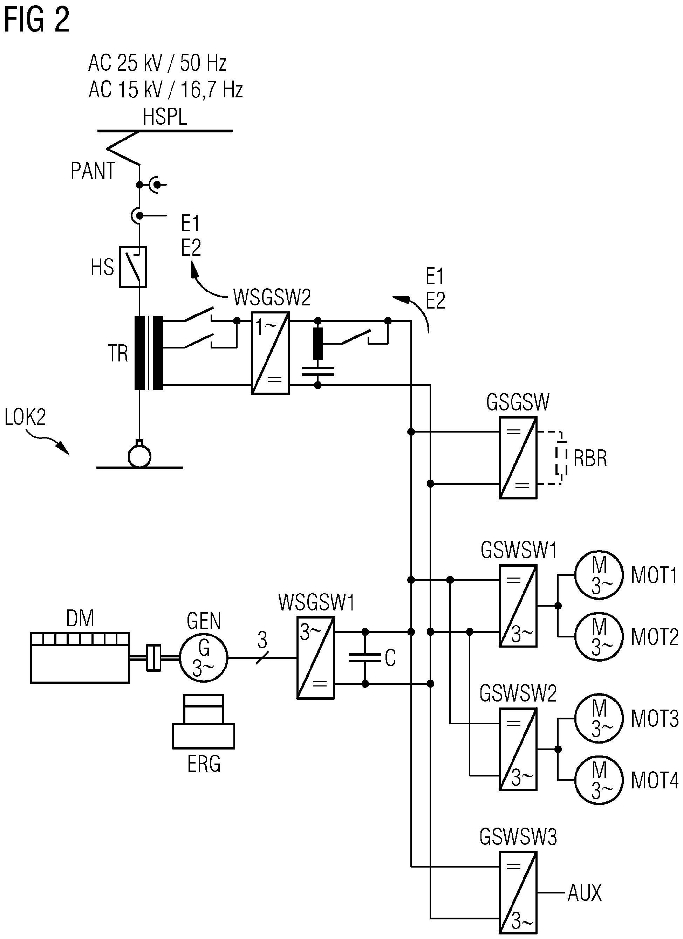

FIG 2 zeigt eine zweite Ausgestaltung der erfindungsgemäßen Anordnung zum Selbstlasttest bei einer Dual-Mode-Lokomotive LOK2.

Mit Bezug auf FIG 2 gelten für gleiche Bezugszeichen die oben genannten Ausführungen.

Abweichend zu FIG 1 wird bei dieser Ausgestaltung beim Selbsttest nicht nur ein Anteil der Leistung über die Serienschaltung zur Hochspannungsleitung HSPL geführt, sondern die gesamte Leistung, also E1 und E2.

Vorteilhaft kann hier auf die Mitwirkung des Bremswiderstands RBR gänzlich verzichtet werden. Der Bremswiderstand RBR ist somit stromlos.

## Patentansprüche

1. Anordnung zur Durchführung eines Selbstlasttests,
mit einem Schienenfahrzeug (LOK1, LOK2), das über ein Dual-Mode-Antriebssystem (GEN, HSPL) verfügt,
- bei der ein erstes Antriebssystem (DM) des Schienenfahrzeugs (LOK1, LOK2) einen Dieselmotor (DM) umfasst, der mit einem elektrischen Generator (GEN) gekoppelt ist, um elektrische Leistung zu erzeugen,
- bei der der Generator (GEN) ausgangsseitig über einen ihm nachgeschalteten ersten Wandler (WSGSW1), der als Wechselspannungs-Gleichspannungswandler geschaltet ist, mit einem Gleichspannungszwischenkreis verbunden ist, so dass die vom Generator (GEN) gelieferte Leistung bei Bedarf über den ersten Wandler (WSGSW1) in den Gleichspannungszwischenkreis übertragbar ist,
- bei der ein zweites Antriebssystem (HSPL) des Schienenfahrzeugs ein elektrisches Leitungssystem (HSPL) aufweist, das über einen ihm nachgeschalteten zweiten Wandler (WSGSW2) mit dem Gleichspannungszwischenkreis verbunden ist, so dass bei Bedarf Leistung vom Leitungssystem (HSPL) in den Gleichspannungszwischenkreis übertragbar ist,
- bei der der Gleichspannungszwischenkreis über einen dritten Wandler (GSGSW) mit einem Bremswiderstand (RBR) verbunden ist, der innerhalb des Schienenfahrzeugs (LOK1, LOK2) angeordnet ist,
- bei der der dritte Wandler (GSGSW) als Gleichspannungs-Gleichspannungswandler geschaltet ist, um beim Bremsen nicht mehr benötigte Leistung aus dem Gleichspannungszwischenkreis zum Bremswiderstand (RBR) zu übertragen,
- bei der der Bremswiderstand (RBR) derart dimensioniert ist, dass er die ihm zugeführte Leistung in Wärme umformt,
- bei der bei einem Selbstlasttest des Dieselmotors (DM) der Dieselmotor zur Tauglichkeitsprüfung mit einer Belastung beaufschlagt ist, die im Maximalfall der Nennlast des Dieselmotors entspricht,
- bei der beim Selbstlasttest der Generator (GEN), der erste Wandler (WSGSW1), der Gleichspannungszwischenkreis und der dritte Wandler (GSGSW) derart geschaltet sind, dass ein erster Teil (E1) der vom Dieselmotor (DM) erzeugten Leistung, die über den ersten Wandler (WSGSW1) in den Gleichspannungszwischenkreis gelangt, von dort über den dritten Wandler (GSGSW), der als Gleichspannungs-Gleichspannungswandler geschaltet ist, dem Bremswiderstand (RBR) zugeführt wird, und
- bei der beim Selbstlasttest der Generator (GEN), der erste Wandler (WSGSW1), der Gleichspannungszwischenkreis, der zweite Wandler (WSGSW2) und das Leitungssystem (HSPL) derart geschaltet sind,
- dass ein zweiter Teil (E2) der vom Dieselmotor (DM) erzeugten Leistung, die über den ersten Wandler (WSGSW1) in den Gleichspannungszwischenkreis gelangt, von dort über den zweiten Wandler (WSGSW2) dem Leitungssystem (HSPL) zugeführt wird, und
- dass die dem zweiten Wandler (WSGSW2) zugeführte Leistung in das Leitungssystem (HSPL) eingespeist wird.

2. Anordnung nach Anspruch 1, bei der das Leitungssystem (HSPL) als Oberleitungssystem oder als Schienen-nahes Leitungssystem ausgebildet ist.

3. Anordnung nach einem der vorhergehenden Ansprüche, bei der das Leitungssystem als Gleichstrom-basiertes Leitungssystem oder als Wechselstrom-basiertes Leitungssystem ausgebildet ist.

4. Anordnung nach Anspruch 3,
- bei der das Wechselstrom-basierte Leitungssystem (HSPL) über einen Transformator (TR) mit dem zweiten Wandler (WSGSW2) verbunden ist,
- bei der der zweite Wandler (WSGSW2) als Wechselspannungs-Gleichspannungswandler geschaltet ist, um Leistung aus dem Leitungssystem (HSPL) in den Gleichspannungszwischenkreis zu übertragen,
- bei der der zweite Wandler (WSGSW2) als Gleichspannungs-Wechselspannungswandler geschaltet ist, um beim Selbstlasttest Leistung aus dem Gleichspannungszwischenkreis in das Leitungssystem (HSPL) zu übertragen.

5. Anordnung nach einem der vorhergehenden Ansprüche,
- bei der zumindest ein elektrischer Motor (MOT1, ...), der als Antriebsmotor des Schienenfahrzeugs (LOK1, LOK2) mit einem Rad des Schienenfahrzeugs (LOK1, LOK2) gekoppelt ist, über einen weiteren Wandler (GSWSW1, GSWSW2) mit dem Gleichspannungszwischenkreis verbunden ist, und
- bei der dieser Wandler (GSWSW1, GSWSW2) als Gleichspannungs-Wechselspannungswandler ausgebildet und derart geschaltet ist, dass Leistung aus dem Gleichspannungszwischenkreis zum Antriebsmotor (MOT1,...) übertragen wird.

6. Verfahren zur Durchführung eines Selbstlasttests in einem Schienenfahrzeug (LOK1, LOK2), das über ein Dual-Mode-Antriebssystem (GEN, HSPL) verfügt,
- bei dem bei einem ersten Antriebssystem (DM) des Schienenfahrzeugs (LOK1, LOK2) ein Dieselmotor (DM) durch Kopplung einen elektrischen Generator (GEN) antreibt, um elektrische Leistung zu erzeugen,
- bei dem die vom Generator (GEN) gelieferte elektrische Leistung bei Bedarf über einen ersten Wandler (WSGSW1), der als Wechselspannungs-Gleichspannungswandler betrieben wird, an einen Gleichspannungszwischenkreis gelangt,
- bei dem ein zweites Antriebssystem (HSPL) des Schienenfahrzeugs bei Bedarf Leistung von einem elektrischen Leitungssystem (HSPL) entnimmt und diese über einen zweiten Wandler (WSGSW2) in den Gleichspannungszwischenkreis gelangt,
- bei dem ein dritter Wandler (GSGSW), der eingangsseitig mit dem Gleichspannungszwischenkreis und ausgangsseitig mit einem innerhalb des Schienenfahrzeugs (LOK1, LOK2) angeordneten Bremswiderstand (RBR) verbunden ist, derart als Gleichspannungs-Gleichspannungswandler gesteuert wird, dass beim Bremsen nicht mehr benötigte Leistung aus dem Gleichspannungszwischenkreis dem Bremswiderstand (RBR) zugeführt wird,
- bei dem der Bremswiderstand (RBR) die ihm zugeführte Leistung in Wärme umformt,
- bei dem bei einem Selbstlasttest des Dieselmotors (DM) der Dieselmotor zur Tauglichkeitsprüfung mit einer Belastung beaufschlagt wird, die im Maximalfall der Nennlast des Dieselmotors entspricht,
- bei dem beim Selbstlasttest der dritte Wandler (GSGSW) als Gleichspannungs-Gleichspannungswandler derart gesteuert wird, dass ein erster Teil (E1) der vom Dieselmotor (DM) erzeugten Leistung, die über den ersten Wandler (WSGSW1) in den Gleichspannungszwischenkreis gelangt, von dort über den dritten Wandler (GSGSW) dem Bremswiderstand (RBR) zugeführt wird,
- bei dem beim Selbstlasttest der zweite Wandler (WSGSW2) derart gesteuert wird, dass ein zweiter Teil (E2) der vom Dieselmotor (DM) erzeugten Leistung, die über den ersten Wandler (WSGSW1) in den Gleichspannungszwischenkreis gelangt, von dort über den zweiten Wandler (WSGSW2) dem Leitungssystem (HSPL) zugeführt wird, und
- bei dem die dem zweiten Wandler (WSGSW2) zugeführte Leistung in das Leitungssystem (HSPL) eingespeist wird.

7. Verfahren nach Anspruch 6,
- bei dem als Leitungssystem (HSPL) ein Oberleitungssystem oder ein Schienen-nahes Leitungssystem verwendet wird, und/oder
- bei dem als Leitungssystem ein Gleichstrom-basiertes Leitungssystem oder ein Wechselstrom-basiertes Leitungssystem verwendet wird.

8. Verfahren nach Anspruch 7,
- bei dem das Wechselstrom-basierte Leitungssystem (HSPL) über einen Transformator (TR) mit dem zweiten Wandler (WSGSW2) verbunden wird,
- bei dem der zweite Wandler (WSGSW2) als Wechselspannungs-Gleichspannungswandler verwendet wird, um Leistung aus dem Leitungssystem (HSPL) in den Gleichspannungszwischenkreis zu übertragen,
- bei dem der zweite Wandler (WSGSW2) als Gleichspannungs-Wechselspannungswandler verwendet wird, um beim Selbstlasttest Leistung aus dem Gleichspannungszwischenkreis in das Leitungssystem (HSPL) zu übertragen.

9. Verfahren nach einem der Ansprüche 6 bis 8,
- bei dem zumindest ein elektrischer Motor (MOT1, ...) als Antriebsmotor des Schienenfahrzeugs (LOK1, LOK2) verwendet wird, wobei der Motor mit einem Rad des Schienenfahrzeugs (LOK1, LOK2) gekoppelt ist,
- bei dem der elektrische Motor über einen weiteren Wandler (GSWSW1, GSWSW2) mit dem Gleichspannungszwischenkreis verbunden wird, und
- bei dem dieser Wandler (GSWSW1, GSWSW2) als Gleichspannungs-Wechselspannungswandler betrieben wird, um Leistung aus dem Gleichspannungszwischenkreis zum Antriebsmotor (MOT1,...) zu übertragen.

## Claims

1. Arrangement for carrying out a self-load test,
having a rail vehicle (LOK1, LOK2) that has a dual-mode drive system (GEN, HSPL),
- in which a first drive system (DM) of the rail vehicle (LOK1, LOK2) comprises a diesel engine (DM) that is coupled to an electric generator (GEN) in order to generate electrical power,
- in which the output side of the generator (GEN) is connected to a DC link via a first converter (WSGSW1), which is connected downstream of said generator and is connected as an AC/DC converter, so that the power delivered by the generator (GEN) can be transmitted as required via the first converter (WSGSW1) into the DC link,
- in which a second drive system (HSPL) of the rail vehicle has an electrical line system (HSPL) that is connected to the DC link via a second converter (WSGSW2), which is connected downstream of said electrical line system, so that power from the line system (HSPL) can be transmitted as required into the DC link,
- in which the DC link is connected via a third converter (GSGSW) to a braking resistor (RBR) that is arranged inside the rail vehicle (LOK1, LOK2),
- in which the third converter (GSGSW) is connected as a DC/DC converter in order to transmit power that is no longer required from the DC link to the braking resistor (RBR) during braking,
- in which the braking resistor (RBR) is dimensioned in such a way that it converts the power that is fed to it into heat,
- in which, during a self-load test of the diesel engine (DM), the diesel engine has a load applied to it, which in the maximum case corresponds to the nominal load of the diesel engine, for the purpose of suitability testing,
- in which, during the self-load test, the generator (GEN), the first converter (WSGSW1), the DC link and the third converter (GSGSW) are connected in such a way that a first portion (E1) of the power that is generated by the diesel engine (DM) and passes via the first converter (WSGSW1) into the DC link is fed from there via the third converter (GSGSW), which is connected as a DC/DC converter, to the braking resistor (RBR), and
- in which, during the self-load test, the generator (GEN), the first converter (WSGSW1), the DC link, the second converter (WSGSW2) and the line system (HSPL) are connected in such a way
- that a second portion (E2) of the power that is generated by the diesel engine (DM) and passes via the first converter (WSGSW1) into the DC link is fed from there via the second converter (WSGSW2) to the line system (HSPL), and
- that the power fed to the second converter (WSGSW2) is fed into the line system (HSPL).

2. Arrangement according to Claim 1, in which the line system (HSPL) is designed as an overhead line system or as a line system that is close to the rails.

3. Arrangement according to one of the preceding claims, in which the line system is designed as a DC-based line system or as an AC-based line system.

4. Arrangement according to Claim 3,
- in which the AC-based line system (HSPL) is connected to the second converter (WSGSW2) via a transformer (TR),
- in which the second converter (WSGSW2) is connected as an AC/DC converter in order to transmit power from the line system (HSPL) to the DC link,
- in which the second converter (WSGSW2) is connected as a DC/AC converter in order to transmit power from the DC link to the line system (HSPL) during the self-load test.

5. Arrangement according to one of the preceding claims,
- in which at least one electric motor (MOT1, ...), which is coupled to a wheel of the rail vehicle (LOK1, LOK2) as drive motor of the rail vehicle (LOK1, LOK2), is connected to the DC link via a further converter (GSWSW1, GSWSW2), and
- in which said converter (GSWSW1, GSWSW2) is designed as a DC/AC converter and is connected in such a way that power is transmitted from the DC link to the drive motor (MOT1, ...).

6. Method for carrying out a self-load test in a rail vehicle (LOK1, LOK2) that has a dual-mode drive system (GEN, HSPL),
- in which, in a first drive system (DM) of the rail vehicle (LOK1, LOK2), a diesel engine (DM) drives an electric generator (GEN) through coupling in order to generate electrical power,
- in which the electrical power delivered by the generator (GEN) passes as required via a first converter (WSGSW1), which is operated as an AC/DC converter, to a DC link,
- in which a second drive system (HSPL) of the rail vehicle draws power from an electrical line system (HSPL) as required and passes it to the DC link via a second converter (WSGSW2),
- in which a third converter (GSGSW), the input side of which is connected to the DC link and the output side of which is connected to a braking resistor (RBR) arranged inside the rail vehicle (LOK1, LOK2), is controlled as a DC/DC converter in such a way that, during braking, power that is no longer required is fed from the DC link to the braking resistor (RBR),
- in which the braking resistor (RBR) converts the power that is fed to it into heat,
- in which, during a self-load test of the diesel engine (DM), the diesel engine has a load applied to it, which in the maximum case corresponds to the nominal load of the diesel engine, for the purpose of suitability testing,
- in which, during the self-load test, the third converter (GSGSW) is controlled as a DC/DC converter in such a way that a first portion (E1) of the power that is generated by the diesel engine (DM) and passes via the first converter (WSGSW1) into the DC link is fed from there via the third converter (GSGSW) to the braking resistor (RBR),
- in which, during the self-load test, the second converter (WSGSW2) is controlled in such a way that a second portion (E2) of the power that is generated by the diesel engine (DM) and passes via the first converter (WSGSW1) into the DC link is fed from there via the second converter (WSGSW2) to the line system (HSPL), and
- in which the power fed to the second converter (WSGSW2) is fed into the line system (HSPL).

7. Method according to Claim 6,
- in which an overhead line system or a line system that is close to the rails is used as line system (HSPL), and/or
- in which a DC-based line system or an AC-based line system is used as line system.

8. Method according to Claim 7,
- in which the AC-based line system (HSPL) is connected to the second converter (WSGSW2) via a transformer (TR),
- in which the second converter (WSGSW2) is used as an AC/DC converter in order to transmit power from the line system (HSPL) to the DC link,
- in which the second converter (WSGSW2) is used as a DC/AC converter in order to transmit power from the DC link to the line system (HSPL) during the self-load test.

9. Method according to one of Claims 6 to 8,
- in which at least one electric motor (MOT1, ...) is used as drive motor of the rail vehicle (LOK1, LOK2), wherein the motor is coupled to a wheel of the rail vehicle (LOK1, LOK2),
- in which the electric motor is connected to the DC link via a further converter (GSWSW1, GSWSW2), and
- in which said converter (GSWSW1, GSWSW2) is operated as a DC/AC converter in order to transmit power from the DC link to the drive motor (MOT1, ...).

## Revendications

1. Dispositif pour effectuer un test de charge automatique sur un véhicule ferroviaire (LOK1, LOK2) qui dispose d'un système d'entraînement Dual Mode (GEN, HSPL),
- dans lequel un premier système d'entraînement (DM) du véhicule ferroviaire (LOK1, LOK2) comprend un moteur diesel (DM) qui est couplé à un générateur électrique (GEN) pour produire de la puissance électrique,
- dans lequel le générateur (GEN) est relié en sortie à un circuit intermédiaire de tension continue par un premier convertisseur (WSGSW1) branché en aval de celui-ci, qui est branché en tant que convertisseur tension alternative-tension continue, de façon à ce que la puissance fournie par le générateur (GEM) puisse être transmise si besoin dans le circuit intermédiaire de tension continue par le premier convertisseur (WSGSW1),
- dans lequel un deuxième système d'entraînement (HSPL) du véhicule ferroviaire présente un système de puissance électrique (HSPL), qui est relié au circuit intermédiaire de tension continue par un deuxième convertisseur (WSGSW2) branché en aval de celui-ci, de façon à ce que si besoin, de la puissance du système de puissance (HSPL) puisse être transmise dans le circuit intermédiaire de tension continue,
- dans lequel le circuit intermédiaire de tension continue est relié à une résistance de freinage (RBR) par un troisième convertisseur (GSGSW), qui est disposée à l'intérieur du véhicule ferroviaire (LOK1, LOK2),
- dans lequel le troisième convertisseur (GSGSW) est branché en tant que convertisseur tension continue-tension continue pour transmettre lors du freinage, de la puissance qui n'est plus nécessaire du circuit intermédiaire de tension continue à la résistance de freinage (RBR),
- dans lequel la résistance de freinage (RBR) est ainsi dimensionnée qu'elle convertit la puissance qui lui est fournie en chaleur,
- dans lequel, lors d'un test de charge automatique du moteur diesel (DM), le moteur diesel reçoit une charge qui dans le cas maximal correspond à la charge nominale du moteur diesel, pour un contrôle d'aptitude,
- dans lequel, lors du test de charge automatique, le générateur (GEN), le premier convertisseur (WSGSW1), le circuit intermédiaire de tension continue et le troisième convertisseur (GSGSW) sont ainsi branchés qu'une première partie (E1) de la puissance produite par le moteur diesel (DM) qui arrive dans le circuit intermédiaire de tension continue par le premier convertisseur (WSGSW1), est dirigée de là vers la résistance de freinage (RBR) par le troisième convertisseur (GSGSW) qui est branché en tant que convertisseur tension continue-tension continue, et
- dans lequel, lors du test de charge automatique, le générateur (GEN), le premier convertisseur (WSGSW1), le circuit intermédiaire de tension continue, le deuxième convertisseur (WSGSW2) et le système de puissance (HSPL) sont ainsi branchés
- qu'une deuxième partie (E2) de la puissance produite par le moteur diesel (DM) qui arrive dans le circuit intermédiaire de tension continue par le premier convertisseur (WSGSW1), est dirigée de là vers le système de puissance (HSPL) par le biais du deuxième convertisseur (WSGSW2), et
- que la puissance dirigée vers le deuxième convertisseur (WSGSW2) est alimentée dans le système de puissance (HSPL).

2. Dispositif selon la revendication 1, dans lequel le système de puissance (HSPL) est conçu en tant que système de caténaire ou en tant que système de puissance proche du rail.

3. Dispositif selon l'une des revendications précédentes, dans lequel le système de puissance est conçu en tant que système de puissance basé sur courant continu ou en tant que système de puissance basé sur courant alternatif.

4. Dispositif selon la revendication 3,
- dans lequel le système de puissance (HSPL) basé sur courant alternatif est relié au deuxième convertisseur (WSGSW2) par un transformateur (TR),
- dans lequel le deuxième convertisseur (WSGSW2) est branché en tant que convertisseur tension alternative-tension continue pour transmettre de la puissance du système de puissance (HSPL) au circuit intermédiaire de tension continue,
- dans lequel le deuxième convertisseur (WSGSW2) est branché en tant que convertisseur tension continue-tension alternative, pour transmettre de la puissance du circuit intermédiaire de tension continue dans le système de puissance (HSPL) lors du test de charge automatique.

5. Dispositif selon l'une des revendications précédentes,
- dans lequel au moins un moteur électrique (MOT1, ...) qui est couplé à une roue du véhicule ferroviaire (LOK1, LOK2) en tant que moteur d'entraînement du véhicule ferroviaire (LOK1, LOK2), est relié au circuit intermédiaire de tension continue par un convertisseur supplémentaire (GSWSW1, GSWSW2), et
- dans lequel ce convertisseur (GSWSW1, GSWSW2) est conçu en tant que convertisseur tension continue-tension alternative et est ainsi branché que la puissance du circuit intermédiaire de tension est transmise au moteur d'entraînement (MOT1, ...).

6. Procédé pour effectuer un test de charge automatique sur un véhicule ferroviaire (LOK1, LOK2) qui dispose d'un système d'entraînement Dual Mode (GEN, HSPL),
- dans lequel, dans un premier système d'entraînement (DM) du véhicule ferroviaire (LOK1, LOK2), un moteur diesel (DM) entraîne un générateur électrique (GEN) par couplage pour produire de la puissance électrique,
- dans lequel la puissance électrique fournie par le générateur (GEM) arrive si besoin sur un circuit intermédiaire de tension continue par un premier convertisseur (WSGSW1) qui est exploité en tant que convertisseur tension alternative-tension continue,
- dans lequel un deuxième système d'entraînement (HSPL) du véhicule ferroviaire prélève si besoin de la puissance d'un système de puissance électrique (HSPL), et celle-ci arrive dans le circuit intermédiaire de tension continue par un deuxième convertisseur (WSGSW2),
- dans lequel un troisième convertisseur (GSGSW) branché en entrée au circuit intermédiaire de tension continue et en sortie à une résistance de freinage (RBR) disposée à l'intérieur du véhicule ferroviaire (LOK1, LOK2), est ainsi piloté en tant que convertisseur tension continue-tension continue, que lors du freinage, de la puissance qui n'est plus nécessaire venant du circuit intermédiaire de tension continue est dirigée vers la résistance de freinage (RBR),
- dans lequel la résistance de freinage (RBR) convertit en chaleur la puissance qui lui est fournie,
- dans lequel, lors d'un test de charge automatique du moteur diesel (DM), le moteur diesel reçoit une charge qui dans le cas maximal correspond à la charge nominale du moteur diesel, pour un contrôle d'aptitude,
- dans lequel, lors du test de charge automatique, le troisième convertisseur (GSGSW) est piloté en tant que convertisseur tension continue-tension continue de telle façon qu'une première partie (E1) de la puissance produite par le moteur diesel (DM), qui arrive dans le circuit intermédiaire de tension continue par le premier convertisseur (WSGSW1), est dirigée de là vers la résistance de freinage (RBR) par le troisième convertisseur (GSGSW),
- dans lequel, lors du test de charge automatique, le deuxième convertisseur (WSGSW2) est ainsi piloté qu'une deuxième partie (E2) de la puissance produite par le moteur diesel (DM) qui arrive dans le circuit intermédiaire de tension continue par le premier convertisseur (WSGSW1), est dirigée de là vers le système de puissance (HSPL) par le biais du deuxième convertisseur (WSGSW2),
- dans lequel la puissance dirigée vers le deuxième convertisseur (WSGSW2) est alimentée dans le système de puissance (HSPL).

7. Procédé selon la revendication 6,
- dans lequel un système de caténaire ou un système de puissance proche du rail est employé en tant que système de puissance (HSPL),
et/ou
- dans lequel un système de puissance basé sur courant continu ou un système de puissance basé sur courant alternatif est employé en tant que système de puissance.

8. Procédé selon la revendication 7,
- dans lequel le système de puissance basé sur courant alternatif (HSPL) est relié au deuxième convertisseur (WSGSW2) par un transformateur (TR),
- dans lequel le deuxième convertisseur (WSGSW2) est employé en tant que convertisseur tension alternative-tension continue pour transmettre de la puissance du système de puissance (HSPL) au circuit intermédiaire de tension continue,
- dans lequel le deuxième convertisseur (WSGSW2) est employé en tant que convertisseur tension continue-tension alternative, pour transmettre de la puissance venant du circuit intermédiaire de tension continue dans le système de puissance (HSPL) lors du test de charge automatique.

9. Procédé selon l'une des revendications 6 à 8,
- dans lequel au moins un moteur électrique (MOT1, ...) est employé en tant que moteur d'entraînement du véhicule ferroviaire (LOK1, LOK2), dans lequel le moteur est couplé à une roue du véhicule ferroviaire (LOK1, LOK2),
- dans lequel le moteur électrique est relié au circuit intermédiaire de tension continue par un convertisseur supplémentaire (GSWSW1, GSWSW2), et
- dans lequel ce convertisseur (GSWSW1, GSWSW2) est conçu en tant que convertisseur tension continue-tension alternative pour transmettre de la puissance venant du circuit intermédiaire de tension au moteur d'entraînement (MOT1, ...).
